# EUROPEAN PATENT SPECIFICATION

(11) **EP 1 699 628 B1**
(45) Date of publication and mention of the grant of the patent: **10.12.2008**
(21) Application number: 04791126.8
(22) Date of filing: 04.10.2004
(51) Int. Cl.: B32B 27/04, B32B 1/08, B32B 15/08, B32B 15/02, F16L 11/08

(54) **REINFORCING STRIP WITH BARRIER LAYER FOR FLEXIBLE PIPES**
VERSTÄRKUNGSSTREIFEN MIT SPERRSCHICHT FÜR FLEXIBLE ROHRE
BANDE DE RENFORCEMENT A COUCHE BARRIERE POUR TUYAUX FLEXIBLES

(30) Priority: 08.12.2003 EP 03104577
(43) Date of publication of application: 13.09.2006
(73) Proprietor: NV Bekaert SA, 8550 Zwevegem (BE)
(72) Inventor: LOKERE, Erwin, B-8830 Hooglede (BE); BOURGOIS, Luc, B-8792 Desselgem (BE)
(74) Representative: Messely, Marc
(86) International application number: PCT/EP2004/052414
(87) International publication number: WO 2005/056289

(56) References cited:
- EP-A- 1 321 702
- WO-A-02/50464
- DE-A- 2 424 207
- US-A- 4 302 266
- US-B1- 6 355 358
- PATENT ABSTRACTS OF JAPAN vol. 2000, no. 24, 11 May 2001 (2001-05-11) & JP 2001 182867 A (BRIDGESTONE CORP), 6 July 2001 (2001-07-06)

## Description

### Field of the invention.

The present invention relates to a strip for use in manufacturing a flexible pipe or tube or hose.

### Background of the invention.

Flexible pipes, tubes or hoses are known. These pipes, tubes or hoses may be made of a thermoplastic material such as polyethylene, medium-density polyethylene (MDPE) or high-density polyethylene (HDPE). In what follows, reference will only be made to pipes, but the teaching may also be applicable to tubes or hoses.
The pipes may be used for transport of all sorts of gases or liquids. Preferably the pipes have a degree of impermeability to gases or to liquids.
One of the reasons therefore is that blistering is to be avoided. Blistering is the occurrence of fractures due to the existence of voids inside the pipe, the presence of gas in the void and the building up of pressure inside the voids until fracture.
Another reason is that when water is allowed to penetrate into the thermoplastic matrix material, this thermoplastic matrix material may loose some of its isolation functions.
The required degree of impermeability may be obtained by applying a continuous metal layer to the inner part of the pipe, for example by means of vapor deposition of aluminum on the extruded cylindrical inner core of the flexible pipe or by winding an aluminum foil helically around the inner core of the flexible pipe. The step of vapor deposition or the step of winding, however, adds to the cost and complexity of the process of manufacturing a flexible pipe.

### Summary of the invention.

It is an object of the present invention to avoid the drawbacks of the prior art.
It is also an object of the present invention to allow for a simplified way of manufacturing a flexible pipe.

It is another object of the present invention to minimize the number of steps in the manufacturing of a flexible pipe with a degree of impermeability.

According to a first aspect of the present invention, there is provided a strip for use in manufacturing a flexible pipe, tube or hose. The strip comprises a thermoplastic matrix having reinforcing elements. The strip further comprises a barrier layer, which is bonded to the thermoplastic matrix.

DE 24 24 207 discloses a flexible laminate, amongst others for making a pipe. The laminate has a body layer constituted by a fibre reinforced matrix of thermoplastic resin. The laminate further comprises a layer made of polyamide. The purpose of this polyamide layer, however, is not to function as a barrier layer.

Within the context of the present invention, the terms "barrier layer" means a barrier layer, which is more impermeable than the thermoplastic matrix comprising the reinforcing elements. The degree of permeability is measured by the amount of particles or molecules of the gas or liquid to be transported, which passes through the material per unit of time. Within the context of the present invention, the thermoplastic matrix is e.g. two times, e.g. three times or more permeable than the barrier layer.

Instead of applying a barrier layer to the inner core of a flexible pipe, the invention already provides the barrier layer to a strip, which will be used to manufacture the flexible pipe. This additional function of the strip allows eliminating the step of rendering the inner core of the flexible pipe impermeable when manufacturing the flexible pipe.

The reinforcing elements are elongated metal elements such as steel wires or steel cords. The barrier layer is an aluminum barrier layer co-laminated to the matrix material by means of an adhesion promotor.

A continuous metal layer bonded to the thermoplastic matrix material forms the barrier layer. This bonding may be done by laminating the continuous metal layer to the thermoplastic matrix, for example with the help of a primer layer, an adhesion promoter or an adhesive resin. Aluminum, has proved to provide a very effective barrier layer.

An advantageous embodiment of the present invention is formed by strip where the width of the thermoplastic matrix material is smaller than the width of the barrier layer.
The barrier may then have one or two zones, which are not supported or bonded, to the thermoplastic matrix. When manufacturing the flexible pipe, this strip is then helically wound around a core of the pipe so that the thermoplastic matrix part forms a closed layer along the length of the flexible pipe. The barrier layer then necessarily overlaps with the strip and the barrier layer of a neighboring winding so that a higher degree of impermeability is obtained.

According to a second aspect of the present invention, there is provided a flexible pipe, tube or hose comprising at least one helically wound strip according to the first aspect of the present invention.

According to a third aspect of the present invention, there is provided a method of manufacturing a flexible pipe or tube. This manufacturing method comprises the steps of:
a) providing a cylindrical core;
b) providing a thermoplastic matrix strip;
c) providing reinforcement elements in the form of steel wires or steel cords in the thermoplastic matrix strip;
d) providing an aluminum barrier layer;
e) co-laminating the barrier layer to the thermoplastic matrix strip;
f) helically winding the thermoplastic matrix strip with the barrier layer around the cylindrical core.
This method of manufacturing avoids the step of applying a barrier layer to the inner side of the flexible pipe or tube.

### Brief description of the drawings.

The invention will now be described into more detail with reference to the accompanying drawings wherein
- FIGURE 1 shows a cross-section of a comparable strip with a thermoplastic barrier layer ;
- FIGURE 2 shows a cross-section of another embodiment of a comparable strip with a thermoplastic barrier layer ;
- FIGURE 3 shows a cross-section of an invention strip with a metal barrier layer ;
- FIGURE 4 shows a cross-section of another embodiment of a strip with a metal barrier layer ;
- FIGURE 5 shows a cross-section of still another embodiment of a strip with a metal barrier layer ;
- FIGURE 6 gives a schematic view of a flexible pipe and some of its components.

### Description of the preferred embodiments of the invention.

### Example 1 : Comparable Example

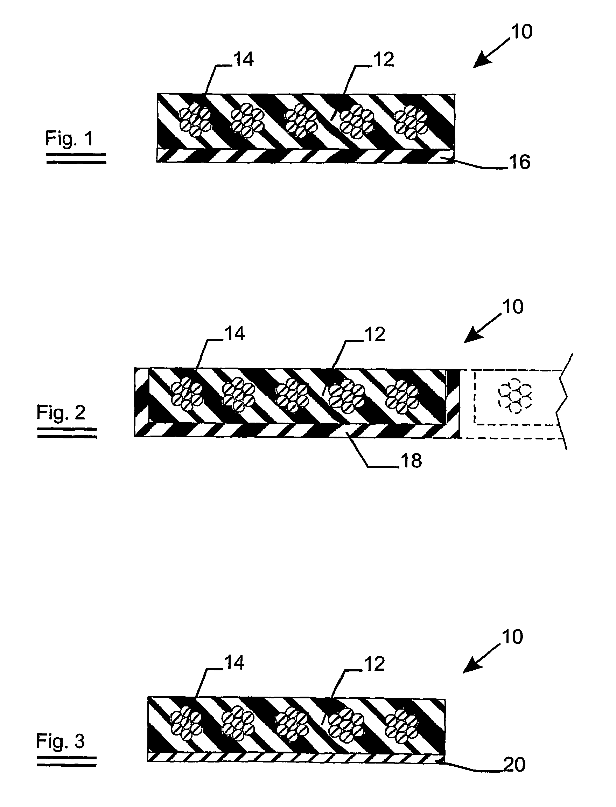

FIGURE 1 is a cross-section of a strip 10 with a thermoplastic matrix 12 and with steel cords 14 as reinforcing elements embedded and anchored in the matrix 12. The strip 10 is also provided with a barrier layer 16 of polyethylene vinyl alcohol, which has been coextruded with the thermoplastic matrix 12 of HDPE. A modified polyethylene intermediate layer may improve the adhesion between the HDPE and the polyethylene vinyl alcohol.
In an alternative embodiment the barrier layer 16 may be laminated to the thermoplastic matrix 12.
The width of the strip is 123.6 mm and the thickness is 1.6 mm. More generally and depending upon the diameter of the inner liner, the width of the strip may vary from 40 mm to 200 mm and more, and the thickness may vary from 0.8 mm to 3.0 mm and more.

### Example 2 : Comparable Example

FIGURE 2 is a cross-section of another embodiment of a strip 10 with a thermoplastic barrier layer. The thermoplastic barrier layer 18 has the form of a U. The thermoplastic barrier layer 18 has a width, which is greater than the width of the thermoplastic matrix 12. The barrier-layer 18 encloses for a great part the thermoplastic matrix 12 and avoids - or at least decreases - gas or liquid penetration to the thermoplastic matrix 12 and to the steel reinforcing elements 14. A neighboring winding of the strip is shown in hatched lines.
A modified polyolefin may improve the adhesion between the thermoplastic barrier layer 18 and the thermoplastic matrix.

### Example 3 : Invention Example

FIGURE 3 is a cross-section of a strip 10 provided with a barrier layer 20 out of metal such as aluminum. The aluminum barrier layer 20 has been co-laminated to the matrix material 12, e.g. by means of an adhesion promoter such as a silane. A silane cross-linkable HOPE can be used as thermoplastic matrix material 12**.**

### Example 4 : Comparable Example

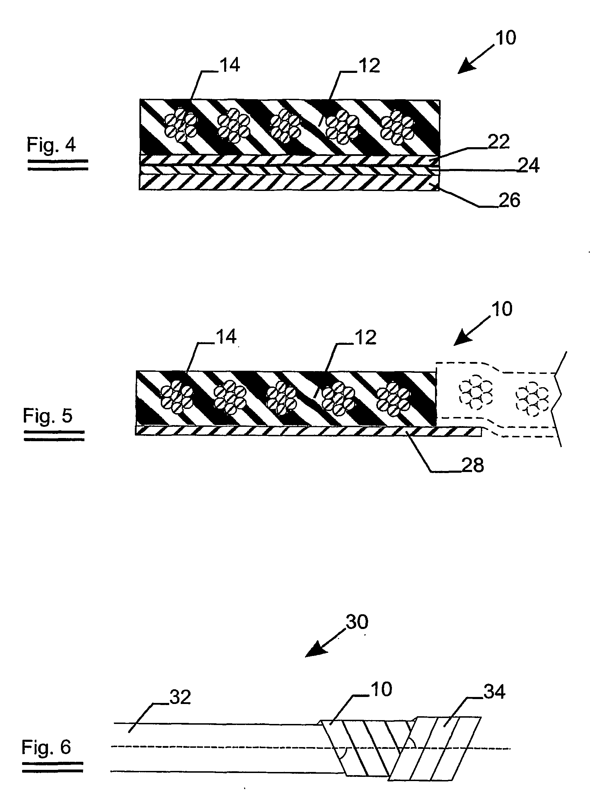

FIGURE 4 is a cross-section of a strip 10, which is also provided with a barrier layer out of metal. Upon the thermoplastic matrix an initial tie or adhesion layer 22 such as chromium is vacuum deposited.
Upon the tie layer 22 comes a vacuum deposited seed layer 24 out of nickel. The final layer 26 is also a nickel layer deposited, however, through an electrolytic way. It is hereby understood that the electrolytic way of deposition is more economic than the vacuum deposition. Vacuum deposition is used to obtain the required level of adhesion and the electrolytic deposition is used to obtain the required degree of thickness, and hence the required degree of impermeability.

### Example 5 : Invention Example

FIGURE 5 is a cross-section of a preferable embodiment of the strip of the present invention. The strip 10 is provided with a metal barrier layer 28 bonded to the thermoplastic matrix 12 by means of a co-lamination process and with the help of an adhesion primer. The width of the barrier layer 28 is greater than the width of the thermoplastic matrix 12 so that a zone is created in the barrier layer 28, which is not supported by the thermoplastic matrix 12. When manufacturing the flexible pipe, more particularly when winding such a strip helically around the core of a flexible pipe with the barrier layer radially inward, the not-supported and protruding zone creates a zone of overlap with the next winding of the strip so as to increase the degree of impermeability and to decrease the speed of penetration. A neighboring winding of the strip is shown in dotted lines.

FIGURE 6 gives a schematical view of a flexible pipe 30. The flexible pipe 30 comprises a thermoplastic cylindrical core 32 around which is wound a strip 10 according to the first aspect of the present invention. This strip 10 forms a predetermined angle a, e.g. 50°, with the axis of the flexible pipe. When winding the strip 10 around the core 32 of the flexible pipe 30, the barrier layer must be situated radially inward. Another reinforcing strip 34, not necessarily with a barrier layer, is wound in the other direction, i.e. forming an angle of -50° with the axis, on the layer of the wound strip 10.

## Claims

1. A strip (10) for use in manufacturing a flexible pipe or tube, said strip comprising a thermoplastic matrix (12) with reinforcing elements (14), wherein said strip (10) further comprises a barrier layer (16), said barrier layer (16) being bonded to said thermoplastic matrix (12), **characterized in that** said reinforcing elements (14) are steel wires or steel cords and that said barrier layer (20) is an aluminum barrier layer co-laminated to the matrix material by means of an adhesion promoter.

2. A strip (10) according to claim 1 wherein said adhesion promoter is a silane.

3. A strip (10) according to claim 1 or claim 2 wherein said thermoplastic matrix (12) is a silane cross-linkable HDPE.

4. A strip (10) according to any one of the preceding claims, wherein said barrier layer (20) is a continuous aluminum layer.

5. A strip (10) according to any one of the preceding claims, said thermoplastic matrix (12) having a matrix width, said barrier (20) having a barrier width, said barrier width exceeding said matrix width so that said barrier (20) has one or two zones which are not bonded to said matrix.

6. A strip (10) according to claim 5, wherein said barrier (20) has only one zone which is not bonded to said matrix (12).

7. A strip (10) according to any one of the preceding claims, wherein said thermoplastic matrix (12) at the side opposite to said barrier layer (20) has been modified or is provided with a tie layer for promoting the adhesion with the material of the flexible pipe or tube.

8. A flexible pipe or tube (30) comprising a strip (10) according to any one of the preceding claims.

9. A method of manufacturing a flexible pipe or tube (30), said method comprising the steps of:
a) providing a cylindrical core;
b) providing a thermoplastic matrix (12) strip (10);
c) providing reinforcing elements (14) in the form of steel wires or steel cords in said thermoplastic matrix strip;
d) providing an aluminum barrier layer (20):
e) co-laminating said barrier layer (20) to said thermoplastic matrix strip by means of an adhesion promoter;
f) helically winding said thermoplastic matrix strip (10) with said barrier layer (20) around said cylindrical core.

## Patentansprüche

1. Streifen (10) für den Gebrauch beim Herstellen eines flexiblen Rohrs oder einer flexiblen Röhre, wobei der Streifen eine Thermoplastmatrix (12) mit Verstärkungselementen (14) aufweist, wobei der Streifen (10) ferner eine Sperrschicht (16) aufweist, wobei die Sperrschicht (16) auf die Thermoplastmatrix (12) geklebt ist, **dadurch gekennzeichnet, dass** die Verstärkungselemente (14) Stahldrähte oder Stahlschnüre sind und dass die Sperrschicht (20) eine Aluminiumsperrschicht ist, die mittels eines Haftfördermittels an das Matrixmaterial laminiert ist.

2. Streifen (10) nach Anspruch 1, wobei das Haftfördermittel ein Silan ist.

3. Streifen (10) nach Anspruch 1 oder 2, wobei die Thermoplastmatrix (12) ein Silan-vernetzbares Polyethylen mit hoher Dichte ist.

4. Streifen (10) nach einem der vorhergehenden Ansprüche, wobei die Sperrschicht (20) eine ununterbrochene Aluminiumschicht ist.

5. Streifen (10) nach einem der vorhergehenden Ansprüche, wobei die Thermoplastmatrix (12) eine Matrixbreite hat, wobei die Sperrschicht (20) eine Sperrbreite hat, wobei die Sperrbreite die Matrixbreite derart überschreitet, dass die Sperrschicht (20) eine oder zwei Zonen hat, die nicht auf die Matrix geklebt sind.

6. Streifen (10) nach Anspruch 5, wobei die Sperrschicht (20) nur eine Zone hat, die nicht an die Matrix (12) geklebt ist.

7. Streifen (10) nach einem der vorhergehenden Ansprüche, wobei die Thermoplastmatrix (12) an der Seite entgegengesetzt zu der Sperrschicht (20) modifiziert wurde oder mit einer Bindeschicht versehen ist, um das Haften auf dem Material des flexiblen Rohrs oder der flexiblen Röhre zu fördern.

8. Flexibles Rohr oder flexible Röhre (30), die einen Streifen (10) nach einem der vorhergehenden Ansprüche aufweist.

9. Verfahren zum Herstellen eines flexiblen Rohrs oder einer flexiblen Röhre (30), wobei das Verfahren die folgenden Schritte aufweist:
a) Bereitstellen einer zylindrischen Seele;
b) Bereitstellen eines Streifens (10) aus Thermoplastmatrix (12);
c) Bereitstellen von Verstärkungselementen (14) in der Form von Stahldrähten oder Stahlschnüren in dem Thermoplastmatrixstreifen;
d) Bereitstellen einer Aluminiumsperrschicht (20);
e) Zusammenlaminieren der Sperrschicht (20) mit dem Thermoplastmatrixstreifen mittels eines Haftfördermittels;
f) schraubenförmiges Winden des Thermoplastmatrixstreifens (10) mit der Sperrschicht (20) um die zylindrische Seele.

## Revendications

1. Bande (10) à utiliser dans la fabrication d'un tuyau ou tube flexible, ladite bande comprenant une matrice thermoplastique (12) avec des éléments de renfort (14), ladite bande (10) comprenant en outre une couche barrière (16), ladite couche barrière (16) étant collée à ladite matrice thermoplastique (12), **caractérisée en ce que** lesdits éléments de renfort (14) sont des fils d'acier ou des câbles d'acier et **en ce que** ladite couche barrière (20) est une couche barrière en aluminium colaminée avec le matériau de matrice au moyen d'un promoteur d'adhérence.

2. Bande (10) selon la revendication 1, dans laquelle ledit promoteur d'adhérence est un silane.

3. Bande (10) selon la revendication 1 ou la revendication 2, dans laquelle ladite matrice thermoplastique (12) est un HDPE réticulable par un silane.

4. Bande (10) selon l'une quelconque des revendications précédentes, dans laquelle ladite couche barrière (20) est une couche d'aluminium continue.

5. Bande (10) selon l'une quelconque des revendications précédentes, ladite matrice thermoplastique (12) ayant une largeur de matrice, ladite barrière (20) ayant une largeur de barrière, ladite largeur de barrière dépassant ladite largeur de matrice de telle sorte que ladite barrière (20) comporte une ou deux zones qui ne sont pas collées à ladite matrice.

6. Bande (10) selon la revendication 5, dans laquelle ladite barrière (20) comporte une seule zone qui n'est pas collée à ladite matrice (12).

7. Bande (10) selon l'une quelconque des revendications précédentes, dans laquelle ladite matrice thermoplastique (12), sur le côté opposé à ladite couche barrière (20), a été modifiée ou est pourvue d'une couche d'accrochage pour favoriser l'adhérence avec le matériau du tuyau ou tube flexible.

8. Tuyau ou tube flexible (30) comprenant une bande (10) selon l'une quelconque des revendications précédentes.

9. Procédé de fabrication d'un tuyau ou tube flexible (30), ledit procédé comprenant les étapes consistant à :
a) se procurer un coeur cylindrique ;
b) se procurer une bande (10) à matrice thermoplastique (12) ;
c) insérer des éléments de renfort (14) sous la forme de fils d'acier ou de câbles d'acier dans ladite bande à matrice thermoplastique ;
d) se procurer une couche barrière (20) en aluminium ;
e) colaminer ladite couche barrière (20) avec ladite bande à matrice thermoplastique au moyen d'un promoteur d'adhérence ;
f) enrouler de façon hélicoïdale ladite bande (10) à matrice thermoplastique avec ladite couche barrière (20) autour dudit coeur cylindrique.
